# EUROPÄISCHE PATENTSCHRIFT

(11) **EP 3 416 140 B1**
(45) Veröffentlichungstag und Bekanntmachung des Hinweises auf die Patenterteilung: **06.03.2024**
(21) Anmeldenummer: 18173203.3
(22) Anmeldetag: 18.05.2018
(51) Int. Cl.: G07C 9/00, B60R 25/00

(54) **VERFAHREN UND VORRICHTUNG ZUM AUTHENTISIEREN EINES NUTZERS AN EINEM FAHRZEUG**
METHOD AND DEVICE FOR AUTHENTICATING A USER ON A VEHICLE
PROCÉDÉ ET DISPOSITIF D'AUTHENTIFICATION D'UN UTILISATEUR SUR UN VÉHICULE

(30) Priorität: 13.06.2017 DE 102017209961
(43) Veröffentlichungstag der Anmeldung: 19.12.2018
(73) Patentinhaber: VOLKSWAGEN AKTIENGESELLSCHAFT, 38440 Wolfsburg (DE)
(72) Erfinder: Bartels, Bastian, 38442 Wolfsburg (DE); Boroske, Sarah, 38118 Braunschweig (DE)

(56) Entgegenhaltungen:
- US-A1- 2014 049 366
- US-A1- 2017 096 123
- US-A1- 2017 154 483

## Beschreibung

Die vorliegende Erfindung betrifft ein Verfahren zum Authentisieren eines Nutzers an einem Fahrzeug, wobei das Fahrzeug mit einer externen Einrichtung, in welcher ein Autorisierungsgeheimcode gespeichert ist, und zumindest zwei Token koppelbar ist, wobei in einem ersten Token ein erster Tokengeheimcode und in einem zweiten Token ein zweiter Tokengeheimcode gespeichert ist. Die Erfindung betrifft ferner eine Vorrichtung zum Authentisieren eines Nutzers an einem Fahrzeug.

Der Absicherung eines Fahrzeugs gegenüber Zugriffen von Unbefugten kommt aufgrund wachsender Vernetzungen innerhalb des Fahrzeugs und des Fahrzeugs mit seiner Umwelt eine immer größere Bedeutung zu. Um einen ungewollten Zugriff von Unbefugten auf gewisse Fahrzeugfunktionen zu unterbinden, soll es verhindert werden, dass diese sich als Verwaltungsberechtigter des Fahrzeugs an dem Fahrzeug einmalig authentisieren können. Besonders sicherheitsbedürftige Funktionen, wie beispielsweise eine Fahrzeugfunktion, die es ermöglicht, digitale Fahrzeugschlüssel an Nutzer zu versenden, erfordern es, dass der Nutzer des Dienstes sowohl seine Identität als auch den Besitz über das Fahrzeug nachweist, sich also bei dem Fahrzeug authentisiert. Über den Authentisierungsvorgang wird der berechtigte Nutzer des Fahrzeugs zum Hauptnutzer des Fahrzeugs und wird für die Nutzung und Verwaltung von Funktionen und Diensten des Fahrzeugs autorisiert. Dabei muss insbesondere sichergestellt werden, dass es Unbefugten so schwer wie möglich gemacht wird, an die zum Identitäts- und Besitznachweis notwendigen Informationen zu gelangen.

Die DE 10 2012 204 842 A1 beschreibt dabei ein Verfahren zum Authentisieren eines Nutzers eines Fahrzeugkommunikations- und Informationssystems. Dabei kann der Nutzer eine tragbare Einrichtung an einem Server registrieren. Hierzu werden Registrierungscodes miteinander verglichen, die sowohl auf der tragbaren Einrichtung als auch auf dem Server gespeichert sind.

Die DE 10 2016 110 103 A1 beschreibt ein Verfahren, bei dem eine Anforderung eines mobilen Geräts zum Paaren mit einem Fahrzeug erfasst wird. Die Anforderung wird genehmigt, wenn erfasst wurde, dass ein erstes Mal bzw. ein zweites Mal sowohl ein erster als auch ein zweiter Fahrzeugschlüssel zum Starten des Fahrzeugs verwendet wurde.

Schließlich beschreibt die US 9,305,412 B2 ein Verfahren zum Autorisieren eines Nutzers zum Öffnen eines Fahrzeugs, bei dem ein Entriegelungsknopf eines Fahrzeugschlüssels betätigt wird. Nur wenn dieser Entriegelungsknopf betätigt wurde, ist es möglich eine PIN zum Öffnen des Fahrzeugs einzugeben.

In der US 2017/0154483 A1 wird ein elektronisches Schließsystem vorgeschlagen, bei dem eine Öffnungsanfrage von einem Mobilgerät empfangen wird. Die Anfrage wird an einen Server übertragen und dieser prüft, ob das Mobilgerät zum Öffnen des Schlosses berechtigt ist. Ist dies der Fall, so wird eine Anweisung zum Öffnen zurückgegeben.

Die US 2017/0096123A1 schlägt ein System zur Zugangskontrolle mittels einer zentralen Steuerungsplattform und eines Mobilgeräts vor. Dabei überprüft das Mobilgerät die Identität eines Nutzers und überträgt eine Anfrage an die zu öffnende Vorrichtung. Diese zieht auch zusätzliche Informationen von der zentralen Steuerungsplattform heran, um Zugang zu gewähren.

Der vorliegenden Erfindung liegt die Aufgabe zugrunde, ein Verfahren und eine Vorrichtung bereitzustellen, mit denen ein Authentisierungsvorgang an einem Fahrzeug sicherer gestaltet werden kann.

Erfindungsgemäß wird diese Aufgabe durch ein Verfahren mit den Merkmalen des Anspruchs 1 und eine Vorrichtung mit den Merkmalen des Anspruchs 9 gelöst. Vorteilhafte Ausgestaltungen und Weiterbildungen ergeben sich aus den abhängigen Ansprüchen.

Bei dem erfindungsgemäßen Verfahren werden der erste Tokengeheimcode des ersten Tokens und der zweite Tokengeheimcode des zweiten Tokens durch das Fahrzeug empfangen. Durch eine Kombination des ersten und zweiten Tokengeheimcodes wird aus den empfangenen Tokengeheimcodes wird ein neuer Geheimcode erzeugt. Der neue Geheimcode wird zum Vergleich an eine externe Einrichtung übermittelt. Wenn der neue Geheimcode mit dem Authentisierungsgeheimcode übereinstimmt, ein Signal wird durch das Fahrzeug von der externen Einrichtung empfangen. Das Signal zeigt an, dass der Nutzer authentisiert werden darf, Der Nutzer wird an dem Fahrzeug authentisiert, wenn der neue Geheimcode mit dem Authentisierungsgeheimcode übereinstimmt. Der Tokengeheimcode wird dabei insbesondere vertraulich an das Fahrzeug übermittelt.

Erfindungsgemäß wird unter dem Begriff Token ein Gegenstand verstanden, der Informationen zum Zweck der Identifikation und Authentifizierung speichern und übertragen kann. Ein solcher Gegenstand kann beispielsweise ein mobiles Endgerät des Nutzers oder ein Fahrzeugschlüssel sein. Dabei kann ein Token beispielsweise über Funk oder eine andere drahtlose Verbindung, beispielsweise eine W-LAN-Verbindung, ein Mobilfunkverbindung oder eine Bluetooth-Verbindung, mit dem Fahrzeug gekoppelt werden. Weiterhin wird unter einer externen Einrichtung eine Einrichtung verstanden, die nicht in dem Fahrzeug, bei dem sich der Nutzer authentisieren möchte, angeordnet ist.

Weiterhin wird unter dem Begriff Authentisieren der Nachweis der Identität des Nutzers verstanden. Mit dem erfindungsgemäßen Verfahren kann sich ein Nutzer nur dann als rechtmäßiger Nutzer des Fahrzeugs ausweisen, wenn er im Besitz des Tokens ist. Auf die Authentisierungsanfrage seitens des Nutzers folgt eine Überprüfung der Anfrage. Dies bedeutet, dass das System überprüft, ob der anfragende Nutzer tatsächlich der Nutzer ist, der er vorgibt zu sein. Das System authentifiziert bei diesem Vorgang den Nutzer. Bei einem positiven Ausgang der Authentifizierung werden dem Nutzer spezielle Rechte für Fahrzeugfunktionen und Dienste eingeräumt. Der Nutzer wird bei diesem Vorgang autorisiert.

Durch das erfindungsgemäße Verfahren wird es vorteilhafterweise ermöglicht, dass, wenn das Fahrzeug bzw. Steuergeräte des Fahrzeugs von außen kompromittiert werden, der Geheimcode, der zur Authentisierung bei dem Fahrzeug notwendig ist, nicht ausgelesen werden kann. Denn dieser ist nicht in dem Fahrzeug, sondern auf einer externen Einrichtung gespeichert. Er wird erst aus dem Tokengeheimcode erzeugt. Zudem wird der Tokengeheimcode nur dann an das Fahrzeug übermittelt, wenn eine mit dem Token ausgeführte Bedienaktion erfasst wurde. Der Tokengeheimcode kann nicht auf Anfrage eines Unbefugten durch das Fahrzeug von dem Token angefordert werden. Vielmehr muss eine Bedienaktion an dem Token selbst ausgeführt werden, um den Tokengeheimcode an das Fahrzeug zu übermitteln. Will sich ein Nutzer bei dem Fahrzeug authentisieren, muss er daher im Besitz des Tokens sein. Die Bedienaktion kann dabei insbesondere die Betätigung eines Entriegelungsknopfes eines Fahrzeugschlüssels sein. Alternativ kann die Bedienaktion auch die Betätigung eines virtuellen oder physischen Schaltknopfes an einem mobilen Endgerät des Nutzers sein.

Weiterhin ist es auch nicht ausreichend, wenn ein Nutzer nur im Besitz des Tokens ist. Denn dadurch, dass in dem Fahrzeug ein neuer Geheimcode erzeugt wird, ist es zum Authentisieren nicht ausreichend, wenn der Nutzer lediglich den Tokengeheimcode kennt. Vielmehr muss er auch in Reichweite des zugehörigen Fahrzeugs sein. Durch das erfindungsgemäße Verfahren wird es daher vorteilhafterweise Unbefugten erschwert, sich unabhängig vom Fahrzeug als rechtmäßiger Nutzer des Fahrzeugs bei der externen Einrichtung auszuweisen.

Bei der Erfindung ist das Fahrzeug mit zumindest zwei Token koppelbar, wobei in einem ersten Token ein erster Tokengeheimcode und in einem zweiten Token ein zweiter Tokengeheimcode gespeichert ist. Der erste Tokengeheimcode wird an das Fahrzeug übermittelt, wenn eine mit dem ersten Token ausgeführte Bedienaktion erfasst wurde. Der zweite Tokengeheimcode wird an das Fahrzeug übermittelt, wenn eine mit dem zweiten Token ausgeführte Bedienaktion erfasst wurde. Der neue Geheimcode wird durch eine Kombination des ersten und zweiten Tokengeheimcodes erzeugt. Um den neuen Geheimcode zu erzeugen ist es notwendig, mehrere Token, insbesondere zumindest zwei Token, zu betätigen. Um sich bei dem Fahrzeug zu authentisieren, muss der Nutzer daher im Besitz der zwei Token sein. Handelt es sich bei den Token um Fahrzeugschlüssel, muss der Fahrzeugbesitzer alle zur Authentisierung notwendigen Fahrzeugschlüssel bei sich tragen, um sich bei dem Fahrzeug zu authentisieren und dann insbesondere sicherheitsrelevante Vorgänge auszuführen. Im Regelbetrieb des Fahrzeugs trägt der Fahrzeugbesitzer nur einen Fahrzeugschlüssel bei sich, um das Fahrzeug zu öffnen und mit ihm zu fahren. Wird ihm dieser entwendet, kann sich ein Unbefugter trotzdem nicht bei dem Fahrzeug registrieren, da die anderen zum Authentisieren notwendigen Token fehlen. Das Verfahren kann auf eine beliebige Anzahl an Token erweitert werden. Dabei sollte jedoch eine bestimmte Anzahl an Token nicht überschritten werden, um weiterhin ein nutzerfreundliches Verfahren bereitzustellen.

Die Tokengeheimcodes können insbesondere Reihenfolgen von Ziffern, Buchstaben und/oder Sonderzeichen sein. Die Tokengeheimcodes sind insbesondere zufällig aneinandergereihte Buchstaben- oder Ziffernfolgen. Weiterhin können die Tokengeheimcodes Kombinationen aus Ziffern, Buchstaben und Sonderzeichen, die beispielsweise zufällig zu einer Reihenfolge aneinandergereiht werden, sein. Die Ziffernfolgen können dabei insbesondere Binärstrings sein. Dabei werden die Tokengeheimcodes bereits im Werk bei Herstellung des Fahrzeugs in den Fahrzeugschlüsseln hinterlegt. Ein Tokengeheimcode ist dabei tatsächlich nur dem Fahrzeugschlüssel bekannt, in dem er hinterlegt ist.

Insbesondere unterscheiden sich der erste und der zweite Tokengeheimcode voneinander. Dadurch ist gewährleistet, dass, auch wenn ein Unbefugter im Besitz eines der Token ist und der Unbefugte an den Tokengeheimcode gelangt, er diesen alleine nicht zur Authentisierung verwenden kann.

Weiterhin kann der neue Geheimcode mittels einer Rechenoperation aus dem ersten Tokengeheimcode und dem zweiten Tokengeheimcode erzeugt werden. Die Rechenoperation ist dabei beispielsweise deterministisch. Weiterhin kann die Rechenoperation eine Konkatenation, eine Permutation, eine XOR-Verknüpfung, eine AND-Verknüpfung, eine Anwendung einer "Key Derivation Function" und/oder eine Hashwertbildung sein.

Alle genannten Rechenoperationen können dabei beliebig miteinander kombiniert werden. So können die Tokengeheimcodes zuerst konkateniert werden und dann eine Hashwertfunktion auf die konkatenierten Tokengeheimcodes angewendet werden. Zudem können die Tokengeheimcodes zuerst konkateniert und dann permutiert oder zuerst permutiert und dann konkateniert werden. Zudem können auch eine Konkatenation und/oder eine Permutation mit einer XOR- und/oder einer AND-Verknüpfung kombiniert werden.

In einer weiteren Ausgestaltung des erfindungsgemäßen Verfahrens wird wenigstens ein Tokengeheimcode verschlüsselt an das Fahrzeug übermittelt. Dabei kann auch nur einer der Tokengeheimcodes verschlüsselt an das Fahrzeug übermittelt werden, insbesondere einer von zwei Tokengeheimcodes. Alternativ können alle vorhandenen Tokengeheimcodes verschlüsselt übermittelt werden. Dabei kann jeder Tokengeheimcode mit dem gleichen Schlüssel verschlüsselt werden. Das Fahrzeug kann dann beispielsweise durch die gleichzeitige Übermittlung der Tokenidentität zwischen den Token unterscheiden. Alternativ kann auch jeder Tokengeheimcode durch einen eigenen Schlüssel verschlüsselt sein. Fahrzeugseitig ist/sind dann der gleiche Schlüssel/die gleichen Schlüssel zur Entschlüsselung gespeichert. Bei solchen Verfahren handelt es sich um symmetrische kryptographische Verfahren. Alternativ können die Tokengeheimcodes auch mit asymmetrischen kryptographischen Verfahren unter Verwendung eines öffentlichen und eines privaten Schlüssels verschlüsselt werden. Weiterhin können zur Verschlüsselung der Tokengeheimcodes alle bekannten kryptographischen Verfahren verwendet werden.

Insbesondere wird wenigstens ein Tokengeheimcode nur so lange in dem Fahrzeug gespeichert, bis der neue Geheimcode erzeugt wurde. Der Tokengeheimcode ist dabei nur temporär in dem Fahrzeug gespeichert. Der Tokengeheimcode befindet sich daher nur so kurz wie möglich in einem Speicher des Fahrzeugs. Es können auch alle vorhandenen Tokengeheimcodes nur so lange in dem Fahrzeug gespeichert werden, bis der neue Geheimcode erzeugt wurde. Wird das Fahrzeug bzw. ein Steuergerät des Fahrzeugs kompromittiert, ist die Wahrscheinlichkeit, dass dabei die Tokengeheimcodes, die zur Erzeugung des Authentisierungsgeheimcodes, notwendig sind, ausgelesen werden können, sehr gering.

Weiterhin kann der neue Geheimcode solange in dem Fahrzeug gespeichert werden, bis er mit dem Authentisierungsgeheimcode verglichen wurde. Hierdurch wird vorteilhafterweise gewährleistet, dass der Geheimcode, mit welchem es möglich ist, sich bei dem Fahrzeug zu authentisieren, nach dem Vergleich wieder aus dem Speicher des Fahrzeugs gelöscht wird. Hierdurch wird gewährleistet, dass der neue Geheimcode nur für kurze Zeit in dem Fahrzeug gespeichert wird. Wird das Fahrzeug bzw. ein Steuergerät des Fahrzeugs von außen kompromittiert, ist die Wahrscheinlichkeit, dass der neue Geheimcode ausgelesen werden kann, sehr gering.

Insbesondere wird der neue Geheimcode nur solange in dem Fahrzeug gespeichert, bis der neue Geheimcode an die externe Einrichtung übermittelt wurde. Dadurch kann die Zeitspanne, für welche sich der neue Geheimcode, welcher dem Authentisierungsgeheimcode entspricht, in dem Fahrzeug befindet, so kurz wie möglich gehalten werden. Dadurch sinkt die Wahrscheinlichkeit, dass der Authentisierungsgeheimcode ausgelesen werden kann, noch weiter. Es wird daher vorteilhafterweise Unbefugten erschwert, sich unabhängig vom Fahrzeug als rechtmäßiger Nutzer des Fahrzeugs bei der externen Einrichtung auszuweisen.

In einer weiteren Ausgestaltung wird direkt nach oder bei der Generierung des neuen Geheimcodes ein veränderter neuer Geheimcode generiert, wobei der neue Geheimcode nur solange in dem Fahrzeug gespeichert wird, bis der veränderte neue Geheimcode generiert wurde. Selbst wenn also der eigentliche Vergleich des veränderten neuen Geheimcodes mit dem Authentisierungsgeheimcode mehrere Minuten dauert, ist es nicht notwendig, den neuen Geheimcode für diese Dauer in dem Fahrzeug zu speichern. Vielmehr kann der neue Geheimcode sofort wieder gelöscht werden. Der neue Geheimcode kann insbesondere dadurch verändert werden, dass er als Eingabeparameter für eine kryptographische Funktion verwendet wird. Dabei kann der neue Geheimcode direkt nach oder bereits bei seiner Generierung in die kryptographische Funktion eingegeben werden. Insbesondere kann eine Nachricht, die an die externe Einrichtung gesendet wird, mit dem neuen Geheimcode signiert werden. Hierzu werden die zu signierende Nachricht und der neue Geheimcode gemeinsam als Eingabeparameter in die kryptographische Funktion eingegeben. Dadurch ist der neue Geheimcode dann zwar in dem Fahrzeug abgespeichert, kann aber nicht von Dritten ausgelesen werden. Weiterhin können zur Veränderung des neuen Geheimcodes alle bekannten kryptographischen Verfahren verwendet werden.

Weiterhin kann die externe Einrichtung einen Zufallscode an das Fahrzeug übermitteln, welcher in die Veränderung des neuen Geheimcodes mit einbezogen wird. Weiterhin ist dann ein veränderter neuer Geheimcode nur für eine bestimmte Zeitspanne gültig, um sich bei der externen Einrichtung als Hauptnutzer zu authentisieren. Bei jeder Anfrage des Fahrzeugs generiert die externe Einrichtung einen neuen Zufallscode, der in die Veränderung des neuen Geheimcodes mit einfließt. Es wird dann bei jeder Anfrage des Fahrzeugs an die externe Einrichtung zum Authentisieren des Hauptnutzers, ein anderer veränderter neuer Geheimcode benötigt. Sollte ein veränderter neuer Geheimcode von einem Unbefugten ausgelesen werden, ist dieser bei einer erneuten Anfrage nicht mehr gültig. Hierdurch kann vorteilhafterweise die Sicherheit des Authentisierungsvorgangs nochmal erhöht werden.

Die Erfindung betrifft ferner eine Vorrichtung zum Authentisieren eines Nutzers an einem Fahrzeug mit einer Steuervorrichtung. Die Vorrichtung umfasst eine externe Einrichtung und mindestens zwei Token und die Steuervorrichtung, die mit zumindest zwei Token koppelbar ist. Dabei ist in einem ersten Token ein erster Tokengeheimcode und in einem zweiten Token ein zweiter Tokengeheimcode gespeichert. Dabei wird der erste Tokengeheimcode des ersten Tokens durch das Fahrzeug über einen sicheren Kanal empfangen und der zweite Tokengeheimcode des zweiten Tokens wird durch das Fahrzeug über einen sicheren Kanal empfangen. Die Steuervorrichtung umfasst eine erste Rechenvorrichtung. Die erste Rechenvorrichtung erzeugt durch eine Kombination des ersten und zweiten Tokengeheimcodes aus den empfangenen Tokengeheimcodes einen neuen Geheimcode und übermittelt den neuen Geheimcode an die externe Einrichtung In der externen Einrichtung ist ein Authentisierungsgeheimcode gespeichert. Die externe Einrichtung umfasst eine zweite Rechenvorrichtung, welche den neuen Geheimcode (Ck) mit dem Authentisierungsgeheimcode (Ca) vergleicht. Wenn der neue Geheimcode mit dem Authentisierungsgeheimcode übereinstimmt, sendet die externe Einrichtung ein Signal an die Steuervorrichtung, wobei das Signal angibt, dass der Nutzer authentisiert werden darf.

Die erfindungsgemäße Vorrichtung ist insbesondere dazu ausgebildet, das vorstehend beschriebene erfindungsgemäße Verfahren zu implementieren. Die Vorrichtung weist somit dieselben Vorteile auf wie das erfindungsgemäße Verfahren.

Bei der Erfindung ist das Fahrzeug mit zumindest zwei Token koppelbar, wobei in einem ersten Token ein erster Tokengeheimcode und in einem zweiten Token ein zweiter Tokengeheimcode speicherbar ist. Dabei können der erste und der zweite Tokengeheimcode identisch sein. Zur Unterscheidung der Token können dann beispielsweise die Tokenidentitäten verwendet werden. Alternativ können sich der erste und der zweite Tokengeheimcode auch voneinander unterscheiden.

Bei einer weiteren Ausbildung ist mittels einer zweiten Rechenvorrichtung der neue Geheimcode mit dem Authentisierungsgeheimcode vergleichbar, wobei über eine Schnittstelle in Abhängigkeit von dem Ergebnis des Vergleichs ein Signal an die Steuervorrichtung gesendet wird, welches angibt, ob der Nutzer authentisiert werden darf oder nicht.

Weiterhin kann die externe Einrichtung ein externer Server sein. Das Fahrzeug ist dabei über ein geschütztes Netzwerk mit dem externen Server koppelbar. Insbesondere kann sich das Fahrzeug über eine W-LAN-Verbindung, eine Mobilfunkverbindung oder eine Bluetooth-Verbindung, insbesondere eine Bluetooth LE-Verbindung, mit dem externen Server verbinden. Die zweite Rechenvorrichtung, in welcher der Vergleich des neuen Geheimcodes mit dem Authentisierungsgeheimcode stattfindet, ist dabei in dem Server angeordnet. Der Vergleich findet daher nicht in dem Fahrzeug, sondern serverseitig statt.

Bei einer weiteren Ausbildung weisen die Token jeweils eine Erfassungseinrichtung auf, mittels welcher eine mit dem jeweiligen Token ausgeführte Bedienaktion erfassbar ist, wobei der erste bzw. zweite Tokengeheimcode an das Fahrzeug übermittelbar ist, wenn die mit dem Token ausgeführte Bedienaktion erfasst wurde.

In einer weiteren Ausgestaltung der erfindungsgemäßen Vorrichtung ist wenigstens ein Token ein Fahrzeugschlüssel. Insbesondere sind alle zur Authentisierung notwendigen Token Fahrzeugschlüssel. Alternativ können die Token auch mobile Endgeräte des Nutzers sein. Insbesondere können ein erstes Token ein Fahrzeugschlüssel und ein zweites Token ein mobiles Endgerät sein. Dadurch ist es nicht notwendig, dass der Nutzer zur Authentisierung mehrere Fahrzeugschlüssel bei sich trägt.

Ferner betrifft die Erfindung ein Fahrzeug mit einer erfindungsgemäßen Vorrichtung.

Die Erfindung wird nun anhand von Ausführungsbeispielen mit Bezug zu den Zeichnungen erläutert.
- Figur 1: zeigt ein Fahrzeug mit einem Ausführungsbeispiel der erfindungsgemäßen Vorrichtung,
- Figur 2: zeigt ein Ausführungsbeispiel des erfindungsgemäßen Verfahrens und
- Figur 3: zeigt ein Flussdiagramm des Ausführungsbeispiels des erfindungsgemäßen Verfahrens.

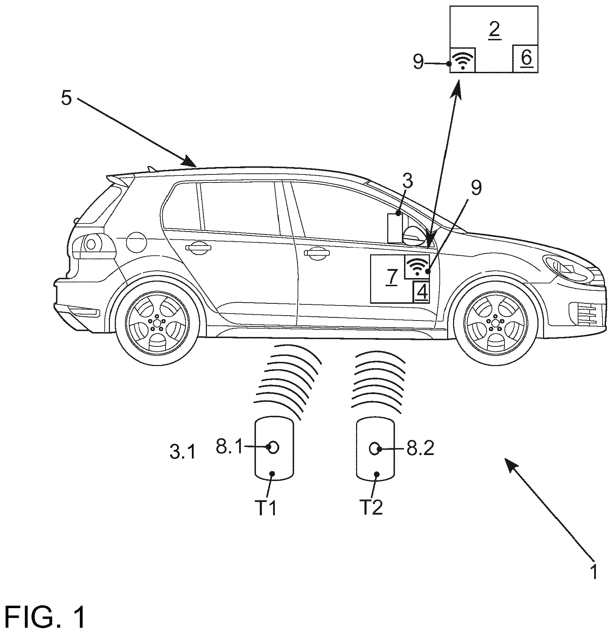

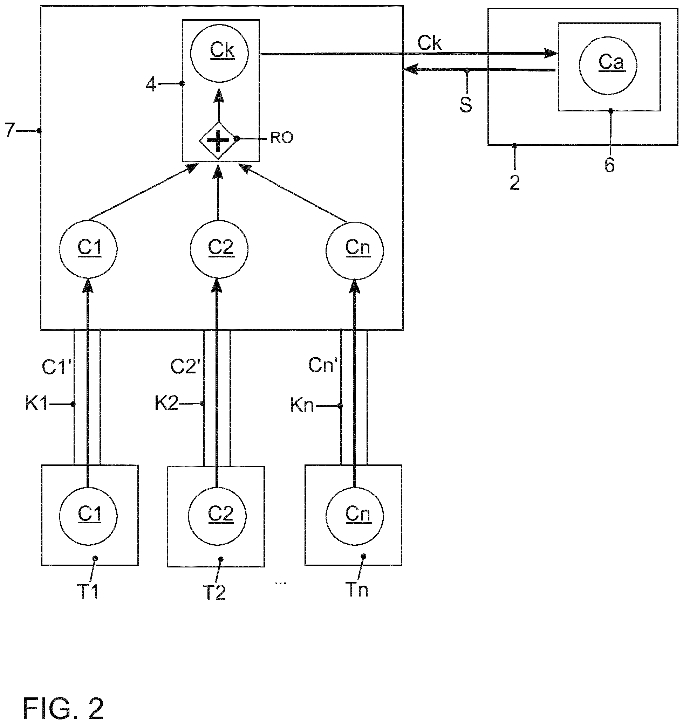

Mit Bezug zu den Figuren 1 und 2 wird ein Fahrzeug 5 mit einem Ausführungsbeispiel einer erfindungsgemäßen Vorrichtung 1 erläutert.

Die Vorrichtung 1 umfasst dabei eine Nutzerschnittstelle 3, die beispielsweise als berührungsempfindliche Anzeigefläche ausgestaltet ist. Mittels der Nutzerschnittstelle 3 kann ein Nutzer sämtliche Einstellungen des Fahrzeugs 5 vornehmen. Es können Basisfunktionen wie auch Komfortfunktionen eingestellt werden. Zudem kann sich der Nutzer über die Nutzerschnittstelle 3 bei dem Fahrzeug 5 als rechtmäßiger Nutzer ausweisen.

Die Vorrichtung 1 umfasst weiterhin die Token T1 und T2. Im konkreten Fall sind die Token T1 und T2 Fahrzeugschlüssel. Die Fahrzeugschlüssel T1 und T2 sind bereits im Werk des Fahrzeugherstellers an das Fahrzeug 5 angelernt worden. Dies bedeutet, dass das Fahrzeug 5 die Fahrzeugschlüssel T1 und T2 kennt und von den Fahrzeugschlüsseln T1 und T2 ausgesendete Signale zum Öffnen der Fahrzeugtüren oder Starten des Motors akzeptiert. Der Fahrzeugschlüssel T1 umfasst dabei den Entriegelungsknopf 8.1 und der Fahrzeugschlüssel T2 umfasst den Entriegelungsknopf 8.2. Die Entriegelungsknöpfe 8.1 und 8.2 werden im Normalbetrieb dazu verwendet, das Fahrzeug 5 zu entriegeln. Dabei führt der Nutzer in der Regel nur einen der beiden Fahrzeugschlüssel T1 oder T2 mit sich. Weiterhin sind die Entriegelungsknöpfe 8.1 und 8.2 als Erfassungseinrichtungen ausgestaltet, welche erfassen, wenn der Nutzer sie betätigt. Weiterhin ist in dem Fahrzeugschlüssel T1 ein erster Tokengeheimcode C1 und in dem Fahrzeugschlüssel T2 ein zweiter Tokengeheimcode C2 gespeichert. Die Tokengeheimcodes C1 und C2 wurden dabei bereits beim Anlernen der Fahrzeugschlüssel T1 und T2 an das Fahrzeug 5 in den Fahrzeugschlüsseln T1 und T2 hinterlegt. Betätigt der Nutzer nun die Entriegelungsknöpfe 8.1 oder 8.2 zum Zwecke der Authentisierung an seinem Fahrzeug 5, wird dies erfasst und die Tokengeheimcodes C1 und C2 werden verschlüsselt an das Fahrzeug 5 übermittelt.

Die Vorrichtung 1 umfasst zudem eine Steuervorrichtung 7. Die Steuervorrichtung 7 wiederum umfasst eine erste Rechenvorrichtung 4. In der ersten Rechenvorrichtung 4 sind dabei Rechenoperationen RO hinterlegt, mittels welcher aus den empfangenen Tokengeheimcodes C1 und C2 ein neuer Geheimcode Ck, ein sogenannter Kombinationsgeheimcode, erzeugt werden kann.

In der Steuervorrichtung 7 des Fahrzeugs 5 selbst ist kein Geheimcode hinterlegt. Dies hat den Vorteil, dass, wenn das Fahrzeug 5, insbesondere die Steuervorrichtung 7 des Fahrzeugs 5, kompromittiert wird, kein Geheimcode von einem Unbefugten ausgelesen werden kann, der eine Benennung als Hauptnutzer in dem Fahrzeug 5 ermöglicht.

Die Vorrichtung 1 umfasst zudem eine externe Einrichtung 2, die als externer Server ausgestaltet ist. Extern bedeutet im vorliegenden Fall, dass der Server nicht in dem Fahrzeug 5 angeordnet ist. Der Server 2 ist beispielsweise bei dem Fahrzeughersteller angeordnet. Das Fahrzeug 5 ist dabei mit dem externen Server 2 koppelbar. Insbesondere kann sich das Fahrzeug 5 mittels der Steuervorrichtung 7 über zumindest eine Schnittstelle 9, beispielsweise eine W-LAN-, Mobilfunk- oder Bluetooth-Schnittstelle, mit dem externen Server 2 verbinden. Mittels der Schnittstelle 9 wird der neue Geheimcode Ck an den externen Server 2 übermittelt. Auch der externe Server 2 kennt die in den Fahrzeugschlüsseln T1 und T2 hinterlegten Tokengeheimcodes C1 und C2 nicht. In dem externen Server 2 ist ein Authentisierungsgeheimcode Ca hinterlegt, der zur Authentifizierung eines Nutzers als Hauptnutzer des Fahrzeugs 5 verwendet wird. Zudem umfasst der externe Server 2 eine zweite Rechenvorrichtung 6, mittels welcher der neue Geheimcode Ck mit dem Authentisierungsgeheimcode Ca verglichen wird. Über die Schnittstelle 9 kann dann nach dem Vergleich ein Signal S an die Steuervorrichtung 7 des Fahrzeugs 5 gesendet werden, welches anzeigt, ob der Nutzer als Hauptnutzer authentisiert werden darf oder nicht. Sind der neue Geheimcode Ck und der Authentisierungsgeheimcode Ca identisch, wird ein Signal S an die Steuervorrichtung 7 des Fahrzeugs 5 gesendet, welches anzeigt, dass der Nutzer als Hauptnutzer authentisiert werden darf. Andernfalls wird ein Signal S an die Steuervorrichtung 7 des Fahrzeugs gesendet, welches anzeigt, dass der Nutzer nicht als Hauptnutzer authentisiert werden darf.

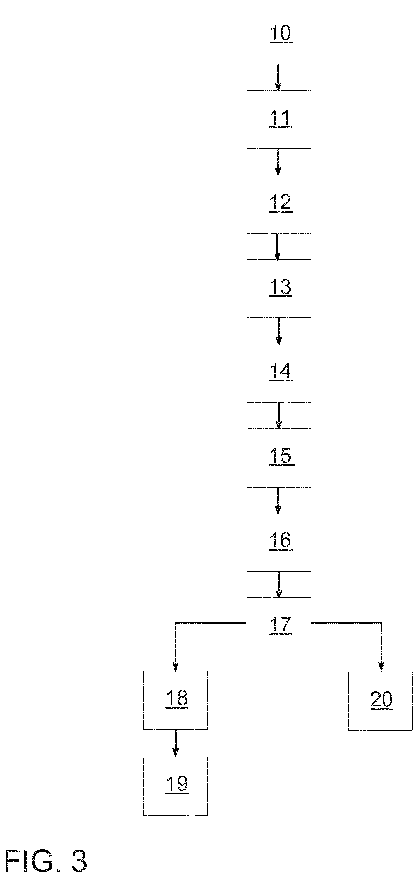

Mit Bezug zu den Figuren 2 und 3 wird ein Ausführungsbeispiel des erfindungsgemäßen Verfahrens erläutert.

In Schritt 10 des erfindungsgemäßen Verfahrens meldet sich der Nutzer auf bekannte Weise über die Nutzerschnittstelle 3 im Fahrzeug 5 an. Zum Anmelden gibt der Nutzer eine Nutzerkennung und ein zu der Nutzerkennung gehöriges Passwort mittels der berührungsempfindlichen Oberfläche ein. Auf der Anzeigefläche der Nutzerschnittstelle 3 erscheint ein Menü, mittels welchem Fahrzeugfunktionen bedient werden können.

In Schritt 11 wählt der Nutzer den Menüpunkt "Hauptnutzer werden" aus.

In Schritt 12 wird der Nutzer dazu aufgefordert, die Entriegelungsknöpfe 8.1 und 8.2 der Fahrzeugschlüssel T1 und T2 zu betätigen. Die Reihenfolge der Betätigung ist dabei nicht relevant. Optional wird dem Nutzer die Anzahl der an das Fahrzeug 5 angelernte Fahrzeugschlüssel angezeigt.

In Schritt 13 wird zunächst erfasst, dass der Entriegelungsknopf 8.1 des Fahrzeugschlüssels T1 betätigt wurde. Der in dem Fahrzeugschlüssel T1 gespeicherte Tokengeheimcode C1 wird daraufhin an die Steuervorrichtung 7 des Fahrzeugs 5 gesendet. Hierzu wird der Tokengeheimcode C1 verschlüsselt. Durch die Verschlüsselung wird ein sicherer Kanal K1 zwischen dem Fahrzeugschlüssel T1 und der Steuervorrichtung 7 aufgebaut, so dass ein Abgreifen des Tokengeheimcodes C1 während des Übermittelns nicht möglich ist.

In Schritt 14 wird dann erfasst, dass der Entriegelungsknopf 8.2 des Fahrzeugschlüssels T2 betätigt wurde. Der Fahrzeugschlüssel T2 sendet den in ihm gespeicherten Tokengeheimcode C2, wiederum verschlüsselt, an das Fahrzeug 5. Durch die Verschlüsselung wird wiederum ein sicherer Kanal K2 zwischen dem Fahrzeugschlüssel T2 und der Steuervorrichtung 7 des Fahrzeugs 5 aufgebaut. Dadurch wird vermieden, dass der Tokengeheimcode C2 während des Sendens von außen abgefangen und ausgelesen werden kann.

Im vorliegenden Ausführungsbeispiel sind die Tokengeheimcodes C1 und C2 identisch. Allgemein können sich die Tokengeheimcodes C1 und C2 auch voneinander unterschieden.

Die Verschlüsselung der Tokengeheimcodes C1 und C2 kann dabei entweder durch symmetrische oder asymmetrische kryptografische Verfahren geschehen. Im vorliegenden Fall werden beide Tokengeheimcodes C1 und C2 mit einem identischen Schlüssel verschlüsselt. Es werden dann die verschlüsselten Tokengeheimcodes C1' und C2' übermittelt. Die Tokengeheimcodes C1' und C2' unterscheiden sich jedoch durch ihre Tokenidentität. Alternativ wird der Tokengeheimcode C1 mit einem ersten Schlüssel und der Tokengeheimcode C2 mit einem zweiten Schlüssel verschlüsselt. Es werden dann die verschlüsselten Tokengeheimcodes C1' und C2' übermittelt, die sich nicht nur durch ihre Tokenidentität, sondern auch durch den auf sie angewendeten Schlüssel unterscheiden. Der Schlüssel ist der Steuervorrichtung 7 bekannt, so dass diese die Geheimcodes C1 und C2 fahrzeugseitig entschlüsseln kann.

Die Schlüssel zur Verschlüsselung der Tokengeheimcodes können dabei beispielsweise wiederum Codes sein. Alternativ können die Tokengeheimcodes auch Eingabeparameter für kryptographische Funktionen sein. Weiterhin zusätzlich oder alternativ können biometrische Merkmale des Nutzers zur Verschlüsselung der Tokengeheimcodes T1 und T2 dienen. Dabei ist insbesondere die Verschlüsselung mittels Fingerabdruck denkbar. Dabei wird von den Token T1 und T2 bei der Betätigung des Entriegelungsknopfes der Fingerabdruck des Nutzers erfasst und mit einer im Fahrzeug 5 hinterlegten Ableitung einer binären Darstellung des Fingerabdrucks verglichen werden. Dieser wird dann gemeinsam mit den Tokengeheimcodes C1 und C2 beispielsweise in eine kryptographische Funktion eingebettet.

In der Steuervorrichtung 7 werden die Tokengeheimcodes C1 und C2 in Schritt 15 durch die Rechenoperation RO miteinander kombiniert. Es wird der neue Geheimcode Ck erzeugt. Sobald der neue Geheimcode Ck erzeugt worden ist, werden die Tokengeheimcodes C1 und C2 wieder aus der Steuervorrichtung 4 gelöscht. Die Tokengeheimcodes C1 und C2 sind daher für die Steuervorrichtung 7, und somit das Fahrzeug 5, nur temporär verfügbar. Dadurch wird verhindert, dass, wenn die Steuervorrichtung 7 von außen kompromittiert wird, die Tokengeheimcodes C1 und C2 dort nicht gespeichert und somit nicht zur Erzeugung des neuen Geheimcodes Ck verwendet werden können, ohne dass vorher die Entriegelungsknöpfe 8.1 und 8.2 beider Fahrzeugschlüssel T1 und T2 betätigt worden sind.

Weiterhin werden direkt nach der Generierung des neuen Geheimcodes Ck ein veränderter neuer Geheimcode Ck' generiert. Hierzu dient der neue Geheimcode Ck beispielsweise als Eingabeparameter für eine kryptographische Funktion. Insbesondere wird eine Nachricht an den externen Server übermittelt. Diese Nachricht wird mit dem neuen Geheimcode Ck signiert. Hierzu werden die Nachricht selbst und der neue Geheimcode Ck in die kryptographische Funktion eingegeben. Dies bedeutet, dass der neue Geheimcode Ck sofort wieder aus dem Speicher des Fahrzeugs 5 gelöscht werden kann. Zudem wird durch diese Veränderung des neuen Geheimcodes Ck ein sicherer Kanal Kk für die Übermittlung an den externen Server 2 aufgebaut.

Weiterhin kann bei der Veränderung des neuen Geheimcodes Ck eine Zufallszahl einfließen, die bei einer Anfrage des Fahrzeugs 5 an den externen Server 2, von dem externen Server 2 generiert und an das Fahrzeug 5 übermittelt wird. Ein solcher veränderter neuer Geheimcode Ck' ist dann für eine bestimmte Zeitdauer gültig. Insbesondere verfällt ein mit Hilfe einer Zufallszahl generierter veränderter neuer Geheimcode Ck` jedoch bei einer erneuten Anfrage. Denn bei jeder Anfrage des Fahrzeugs 5 generiert der externe Server 2 eine neue Zufallszahl. Dadurch wird bei jeder Anfrage ein anderer veränderter neuer Geheimcode Ck' benötigt.

In Schritt 16 wird der veränderte neue Geheimcode Ck` an den externen Server 2 übermittelt. Sobald der veränderte neue Geheimcode Ck' vollständig übermittelt wurde, wird er aus dem Speicher der Steuervorrichtung 7 gelöscht. Auch der veränderte neue Geheimcode Ck` ist somit für das Fahrzeug 5 nur temporär verfügbar. Hierdurch wird ebenfalls vermieden, das bei einer Kompromittierung der Steuervorrichtung 7 des Fahrzeugs 5, der veränderte neue Geheimcode Ck' auslesbar ist. Der externe Server 2 kann dann aus dem veränderten neuen Geheimcode Ck` den neuen Geheimcode Ck herausfiltern und mit dem Authentisierungscode Ca vergleichen.

Wird der neue Geheimcode Ck nicht verändert, wird der sichere Kanal Kk darüber aufgebaut, dass der neue Geheimcode Ck verschlüsselt übermittelt wird. Dadurch wird wiederum vermieden, dass der neue Geheimcode Ck während der Übermittlung von außen abgefangen und ausgelesen werden kann.

Der neue Geheimcode Ck wird in Schritt 17 mit dem auf dem externen Server 2 für das Fahrzeug 5 hinterlegten Authentisierungsgeheimcode Ca verglichen.

Stimmen der neue Geheimcode Ck und der Authentisierungsgeheimcode Ca überein, sendet der externe Server 2 in Schritt 18 an das Fahrzeug 5 ein Authentisierungssignal S, mittels welchem angezeigt wird, dass der Nutzer als Hauptnutzer authentisiert werden darf.

In Schritt 19 werden alle verfügbaren Dienste für den Nutzer freigeschaltet. Insbesondere betrifft dies Fahrzeugdienste, die einer sehr hohen Sicherheitsstufe unterliegen. Beispielsweise ist es möglich digitale Fahrzeugschlüssel an Personen zu versenden. Um zu unterbinden, dass Unbefugte beliebig digitale Schlüssel versenden und so das Fahrzeug 5 leicht entwendet werden kann, ist es notwendig, einem solchen Dienst eine hohe Sicherheitsstufe zuzuweisen.

Stimmen der neue Geheimcode Ck und der Authentisierungsgeheimcode Ca nicht überein, sendet der externe Server 2 an die Steuervorrichtung 4 ein Nicht-Authentisierungssignal S, mittels welchem angezeigt wird, dass der Nutzer nicht als Hauptnutzer authentisiert werden darf.

Das erfindungsgemäße Verfahren ist auf beliebig viele Token Tn erweiterbar. Der Nutzer wird dann zur Betätigung der Entriegelungsknöpfe aller zur Authentisierung notwendigen Token T1 bis Tn aufgefordert. Es werden in diesem Fall alle Tokengeheimcodes C1 bis Cn der n Token an die Steuervorrichtung 7 des Fahrzeugs 5 übermittelt. Diese werden durch die Rechenoperation zu dem neuen Geheimcode Ck kombiniert.

Zur Verschlüsselung der Tokengeheimcodes C1 und C2 und/oder zur Generierung des veränderten neuen Geheimcodes Ck` können zusätzlich oder alternativ biometrische Merkmale des berechtigten Nutzers verwendet werden, wie es bereits zur Verschlüsselung der Tokengeheimcodes C1 und C2 erläutert wurde.

Bei einer nicht erfindungsgemäßen Ausbildung kann das Verfahren auch mit nur einem Token T1 ausgeführt werden. Der Nutzer wird dann nur zur Betätigung des Entriegelungsknopfes 8.1 des Tokens T1 aufgefordert. Es wird dann lediglich ein Tokengeheimcode C1 an die Steuervorrichtung 7 des Fahrzeugs 5 übermittelt. Der neue Geheimcode Ck wird dann aus dem Tokengeheimcode C1 erzeugt. Der neue Geheimcode Ck wird dann über Hashwertbildung oder die Anwendung einer "Key Derivation Function" generiert.

Das erfindungsgemäße Verfahren wird jedoch mit zwei Token T1 und T2 ausgeführt. Dies führt vorteilhafterweise nicht nur zu einer erhöhten Sicherheit sondern auch dazu, dass das Verfahren nutzerfreundlich bleibt. Muss der Nutzer mehr als zwei Token mit in das Fahrzeug 5 nehmen ist die Gefahr, dass er ein Token vergisst oder ein Token verliert, erhöht.

Weiterhin können die Token T1 bis Tn auch mobile Endgeräte des Nutzers oder eine Kombination aus Fahrzeugschlüsseln und mobilen Endgeräten des Nutzers sein. Als mobile Endgeräte eignen sich dabei beispielsweise NFC-Armbänder, NFC-Ringe, NFC-Ketten, Smartwatches, Smartphones und/oder Bio-Chips. Beispielsweise kann das Token T1 ein Fahrzeugschlüssel sein, während als Token T2 ein mobiles Telefon oder ein tragbarer Computer des Nutzers dient. Zur Übermittlung des zweiten Tokengeheimcodes C2 wird der Nutzer dann zur Betätigung einer Taste seines mobilen Endgerätes aufgefordert.

### Bezugszeichenliste

- 1: Vorrichtung
- 2: externe Einrichtung; externer Server
- 3: Nutzerschnittstelle
- 4: erste Rechenvorrichtung
- 5: Fahrzeug
- 6: zweite Rechenvorrichtung
- 7: Steuervorrichtung
- 8.1, 8.2: Entriegelungsknöpfe
- 9: Schnittstelle
- 10 - 20: Verfahrensschritte
- C1, C2, Cn: Tokengeheimcodes
- Ck: neuer Geheimcode
- Ck': veränderter neuer Geheimcode
- Ca: Authentisierungsgeheimcode
- K1, K2, Kn: Kanäle
- RO: Rechenoperation
- S: Signal
- T1, T2, Tn: Token; Fahrzeugschlüssel

## Patentansprüche

1. Verfahren zum Authentisieren eines Nutzers an einem Fahrzeug (5), das mit einer externen Einrichtung (2) und mit zumindest zwei Token (T1 bis Tn) koppelbar ist, wobei in der externen Einrichtung (2) ein Authentisierungsgeheimcode (Ca), in einem ersten Token (T1) ein erster Tokengeheimcode (C1) und in einem zweiten Token (T2) ein zweiter Tokengeheimcode (C2) gespeichert ist, bei dem
der erste Tokengeheimcode (C1) des ersten Tokens (T1) durch das Fahrzeug (5) empfangen wird, wenn eine mit dem ersten Token (T1) ausgeführte Bedienaktion erfasst wurde,
der zweite Tokengeheimcode (C2) des zweiten Tokens (T2) durch das Fahrzeug (5) empfangen wird, wenn eine mit dem zweiten Token (T2) ausgeführte Bedienaktion erfasst wurde,
ein neuer Geheimcode (Ck) durch eine Kombination des ersten und zweiten Tokengeheimcodes (C1, C2) aus den empfangenen Tokengeheimcodes (C1, C2) generiert wird,
der neue Geheimcode (Ck) zum Vergleich an die externe Einrichtung (2) übermittelt wird,
wenn der neue Geheimcode (Ck) mit dem Authentisierungsgeheimcode (Ca) übereinstimmt, ein Signal (S) durch das Fahrzeug (5) von der externen Einrichtung (2) empfangen wird, welches Signal (S) anzeigt, dass der Nutzer authentisiert werden darf, und
der Nutzer an dem Fahrzeug (5) authentisiert wird, wenn der neue Geheimcode (Ck) mit dem Authentisierungsgeheimcode (Ca) übereinstimmt.

2. Verfahren nach Anspruch 1,
**dadurch gekennzeichnet, dass**
sich der erste (C1) und der zweite Tokengeheimcode (C2) voneinander unterscheiden.

3. Verfahren nach einem der Ansprüche 1 oder 2,
**dadurch gekennzeichnet, dass**
der neue Geheimcode (Ck) mittels einer Rechenoperation aus wenigstens einem Tokengeheimcode (C1, C2) erzeugt wird.

4. Verfahren nach einem der vorhergehenden Ansprüche,
**dadurch gekennzeichnet, dass**
wenigstens ein Tokengeheimcode (C1, C2) verschlüsselt an das Fahrzeug (5) übermittelt wird.

5. Verfahren nach einem der vorhergehenden Ansprüche,
**dadurch gekennzeichnet, dass**
wenigstens ein Tokengeheimcode (C1, C2) nur so lange in dem Fahrzeug (5) gespeichert wird, bis der neue Geheimcode (Ck) erzeugt wurde.

6. Verfahren nach einem der vorhergehenden Ansprüche,
**dadurch gekennzeichnet, dass**
der neue Geheimcode (Ck) solange in dem Fahrzeug (5) gespeichert wird, bis er mit dem Authentisierungsgeheimcode (Ca) verglichen wurde.

7. Verfahren nach einem der vorhergehenden Ansprüche,
**dadurch gekennzeichnet, dass**
der neue Geheimcode (Ck) nur solange in dem Fahrzeug (5) gespeichert wird, bis der neue Geheimcode (Ck) an die externe Einrichtung (2) übermittelt wurde.

8. Verfahren nach einem der Ansprüche 1 bis 5,
**dadurch gekennzeichnet, dass**
direkt nach oder bei der Generierung des neuen Geheimcodes (Ck) ein veränderter neuer Geheimcode (Ck') generiert wird, wobei der neue Geheimcode (Ck) nur solange in dem Fahrzeug (5) gespeichert wird, bis der veränderte neue Geheimcode (Ck`) generiert wurde.

9. Vorrichtung (1) zum Authentisieren eines Nutzers an einem Fahrzeug (5) umfassend:
- zumindest zwei Token (T1 bis Tn);
- eine Steuervorrichtung (7), die mit zumindest zwei Token (T1, T2) koppelbar ist, wobei in einem ersten Token (T1) ein erster Tokengeheimcode (C1) und in einem zweiten Token (T2) ein zweiter Tokengeheimcode (C2) gespeichert ist, bei der der erste Tokengeheimcode (C1) des ersten Tokens (T1) durch das Fahrzeug (5) über einen sicheren Kanal (K1) empfangen wird, wenn eine mit dem ersten Token (T1) ausgeführte Bedienaktion erfasst wurde, und bei der der zweite Tokengeheimcode (C2) des zweiten Tokens (T1) durch das Fahrzeug (5) über einen sicheren Kanal (K2) empfangen wird, wenn eine mit dem zweiten Token (T2) ausgeführte Bedienaktion erfasst wurde; und
- eine externe Einrichtung (2), wobei in der externen Einrichtung ein Authentisierungsgeheimcode (Ca) gespeichert ist,
wobei die Steuervorrichtung (7) eine erste Rechenvorrichtung (4) umfasst, welche durch eine Kombination des ersten und zweiten Tokengeheimcodes (C1, C2) aus den empfangenen Tokengeheimcodes (C1, C2) einen neuen Geheimcode (Ck) erzeugt und der neue Geheimcode (Ck) zum Vergleich an die externe Einrichtung (2) übermittelt,
wobei die externe Einrichtung (2) eine zweite Rechenvorrichtung (6) umfasst, welche den neuen Geheimcode (Ck) mit dem Authentisierungsgeheimcode (Ca) vergleicht und, wenn der neue Geheimcode (Ck) mit dem Authentisierungsgeheimcode (Ca) übereinstimmt, ein Signal (S) an die Steuervorrichtung (7) sendet, welches angibt, dass der Nutzer authentisiert werden darf.

10. Vorrichtung nach Anspruch 9,
**dadurch gekennzeichnet, dass**
die externe Einrichtung (2) ein externer Server ist.

11. Vorrichtung nach Anspruch 9 oder 10,
**dadurch gekennzeichnet, dass**
die Token (T1, T2) jeweils eine Erfassungseinrichtung (8.1, 8.2) aufweisen, mittels welcher eine mit dem jeweiligen Token (T1, T2) ausgeführte Bedienaktion erfassbar ist.

12. Vorrichtung nach einem der Ansprüche 9 bis 11,
**dadurch gekennzeichnet, dass**
wenigstens ein Token (T1, T2) ein Fahrzeugschlüssel ist.

13. Fahrzeug, das eine Steuervorrichtung nach einem der Ansprüche 9 bis 12 aufweist.

## Claims

1. A method for authenticating a user on a vehicle (5) which can be coupled to an external device (2) and to at least two tokens (T1 to Tn), wherein an authentication secret code (Ca) is stored in the external device (2), a first token secret code (C1) is stored in the first token (T1), and a second token secret code (C2) is stored in the second token (T2), in which method
the first token secret code (C1) of the first token (T1) is received by the vehicle (5) if an operating action executed with the first token (T1) has been detected,
the second token secret code (C2) of the second token (T2) is received by the vehicle (5) if an operating action executed with the second token (T2) has been detected,
a new secret code (Ck) is generated from the received token secret codes (C1, C2) by a combination of the first and the second token secret code (C1, C2),
the new secret code (Ck) is transmitted to the external device (2) for comparison,
if the new secret code (Ck) matches the authentication secret code (Ca), a signal (S) is received by the vehicle (5) from the external device (2), which signal (S) indicates that the user can be authenticated, and
the user is authenticated on the vehicle (5) if the new secret code (Ck) matches the authentication secret code (Ca).

2. The method according to claim 1,
**characterized in that**
the first (C1) and the second token secret code (C2) differ from one another.

3. The method according to either claim 1 or claim 2,
**characterized in that**
the new secret code (Ck) is generated from at least one token secret code (C1, C2) by means of a computing operation.

4. The method according to any of the preceding claims,
**characterized in that**
at least one token secret code (C1, C2) is transmitted in encrypted form to the vehicle (5).

5. The method according to any of the preceding claims,
**characterized in that**
at least one token secret code (C1, C2) is stored in the vehicle (5) only until the new secret code (Ck) has been generated.

6. The method according to any of the preceding claims,
**characterized in that**
the new secret code (Ck) is stored in the vehicle (5) until it has been compared with the authentication secret code (Ca).

7. The method according to any of the preceding claims,
**characterized in that**
the new secret code (Ck) is stored in the vehicle (5) only until the new secret code (Ck) has been transmitted to the external device (2).

8. The method according to any of claims 1 to 5,
**characterized in that**
a changed new secret code (Ck') is generated directly after or during the generation of the new secret code (Ck), the new secret code (Ck) being stored in the vehicle (5) only until the changed new secret code (Ck') has been generated.

9. An apparatus (1) for authenticating a user on a vehicle (5), comprising:
- at least two tokens (T1 to Tn);
- a control apparatus (7) which can be coupled to at least two tokens (T1, T2), wherein a first token secret code (C1) is stored in a first token (T1) and a second token secret code (C2) is stored in a second token (T2), in which apparatus the first token secret code (C1) of the first token (T1) is received by the vehicle (5) via a secure channel (K1) if an operating action executed with the first token (T1) has been detected, and in which the second token secret code (C2) of the second token (T1) is received by the vehicle (5) via a secure channel (K2) if an operating action executed with the second token (T2) has been detected; and
- an external device (2), wherein an authentication secret code (Ca) is stored in the external device,
wherein the control apparatus (7) comprises a first computing apparatus (4) which generates a new secret code (Ck) from the received token secret codes (C1, C2) by a combination of the first and the second token secret code (C1, C2) and transmits the new secret code (Ck) to the external device (2) for comparison,
wherein the external device (2) comprises a second computing apparatus (6) which compares the new secret code (Ck) with the authentication secret code (Ca) and, if the new secret code (Ck) matches the authentication secret code (Ca), sends a signal (S) to the control apparatus (7) that confirms that the user can be authenticated.

10. The apparatus according to claim 9,
**characterized in that**
the external device (2) is an external server.

11. The apparatus according to either claim 9 or claim 10,
**characterized in that**
the tokens (T1, T2) in each case have a detection device (8.1, 8.2) by means of which an operating action carried out with the relevant token (T1, T2) can be detected.

12. The apparatus according to any of claims 9 to 11,
**characterized in that**
at least one token (T1, T2) is a vehicle key.

13. A vehicle which has a control apparatus according to any of claims 9 to 12.

## Revendications

1. Procédé permettant l'authentification d'un utilisateur sur un véhicule (5) qui peut être couplé à un appareil externe (2) et à au moins deux jetons (T1 à Tn), dans lequel un code secret d'authentification (Ca) est mémorisé dans l'appareil externe (2), un premier code secret de jeton (C1) est mémorisé dans un premier jeton (T1) et un second code secret de jeton (C2) est mémorisé dans un second jeton (T2), dans lequel
le premier code secret de jeton (C1) du premier jeton (T1) est reçu par le véhicule (5) lorsqu'une action de manoeuvre réalisée avec le premier jeton (T1) a été détectée,
le second code secret de jeton (C2) du second jeton (T2) est reçu par le véhicule (5) lorsqu'une action de manoeuvre réalisée avec le second jeton (T2) a été détectée,
un nouveau code secret (Ck) est généré à partir des codes secrets de jetons (C1, C2) reçus par une combinaison des premier et second codes secrets de jetons (C1, C2),
le nouveau code secret (Ck) est transmis pour comparaison à l'appareil externe (2),
si le nouveau code secret (Ck) correspond au code secret d'authentification (Ca), un signal (S) est reçu par le véhicule (5) en provenance de l'appareil externe (2), lequel signal (S) indique que l'utilisateur peut être authentifié, et
l'utilisateur est authentifié sur le véhicule (5) lorsque le nouveau code secret (Ck) correspond au code secret d'authentification (Ca).

2. Procédé selon la revendication 1,
**caractérisé en ce que**
le premier code secret de jeton (C1) et le second code secret de jeton (C2) diffèrent l'un de l'autre.

3. Procédé selon l'une des revendications 1 ou 2,
**caractérisé en ce que**
le nouveau code secret (Ck) est généré au moyen d'une opération de calcul à partir d'au moins un code secret de jeton (C1, C2).

4. Procédé selon l'une des revendications précédentes,
**caractérisé en ce que**
au moins un code secret de jeton (C1, C2) est transmis de manière cryptée au véhicule (5).

5. Procédé selon l'une des revendications précédentes,
**caractérisé en ce que**
au moins un code secret de jeton (C1, C2) n'est mémorisé dans le véhicule (5) que jusqu'à ce que le nouveau code secret (Ck) soit généré.

6. Procédé selon l'une des revendications précédentes,
**caractérisé en ce que**
le nouveau code secret (Ck) est mémorisé dans le véhicule (5) jusqu'à ce qu'il ait été comparé au code secret d'authentification (Ca).

7. Procédé selon l'une des revendications précédentes,
**caractérisé en ce que**
le nouveau code secret (Ck) n'est mémorisé dans le véhicule (5) que jusqu'à ce que le nouveau code secret (Ck) ait été transmis à l'appareil externe (2).

8. Procédé selon l'une des revendications 1 à 5,
**caractérisé en ce que**
directement après la génération du nouveau code secret (Ck) ou lors de celle-ci, un nouveau code secret modifié (Ck`) est généré, dans lequel le nouveau code secret (Ck) n'est mémorisé dans le véhicule (5) que jusqu'à ce que le nouveau code secret modifié (Ck`) ait été généré.

9. Dispositif (1) permettant l'authentification d'un utilisateur sur un véhicule (5) comprenant :
- au moins deux jetons (T1 à Tn) ;
- un dispositif de commande (7) qui peut être couplé à au moins deux jetons (T1, T2), dans lequel un premier code secret de jeton (C1) est mémorisé dans un premier jeton (T1) et un second code secret de jeton (C2) est mémorisé dans un second jeton (T2), dans lequel le premier code secret de jeton (C1) du premier jeton (T1) est reçu par le véhicule (5) par l'intermédiaire d'un canal sécurisé (K1) lorsqu'une action de manoeuvre réalisée avec le premier jeton (T1) a été détectée, et dans lequel le second code secret de jeton (C2) du second jeton (T1) est reçu par le véhicule (5) par l'intermédiaire d'un canal sécurisé (K2) lorsqu'une action de manoeuvre réalisée avec le second jeton (T2) a été détectée ; et
- un appareil externe (2), dans lequel un code secret d'authentification (Ca) est mémorisé dans l'appareil externe,
dans lequel le dispositif de commande (7) comprend un premier dispositif de calcul (4) qui génère un nouveau code secret (Ck) à partir des codes secrets de jetons (C1, C2) reçus par une combinaison des premier et second codes secrets de jetons (C1, C2) et transmet le nouveau code secret (Ck) pour comparaison à l'appareil externe (2),
dans lequel l'appareil externe (2) comprend un second dispositif de calcul (6) qui compare le nouveau code secret (Ck) avec le code secret d'authentification (Ca) et, si le nouveau code secret (Ck) correspond au code secret d'authentification (Ca), envoie un signal (S) au dispositif de commande (7), lequel signal indique que l'utilisateur peut être authentifié.

10. Dispositif selon la revendication 9,
**caractérisé en ce que**
l'appareil externe (2) est un serveur externe.

11. Dispositif selon la revendication 9 ou 10,
**caractérisé en ce que**
les jetons (T1, T2) présentent respectivement un appareil de détection (8.1, 8.2) au moyen duquel une action de manoeuvre réalisée avec le jeton (T1, T2) respectif peut être détectée.

12. Dispositif selon l'une des revendications 9 à 11,
**caractérisé en ce que**
au moins un jeton (T1, T2) est une clé de véhicule.

13. Véhicule qui présente un dispositif de commande selon l'une des revendications 9 à 12.
